# FASCICULE DE BREVET EUROPEEN

(11) **EP 0 690 763 B1**
(45) Date de publication et mention de la délivrance du brevet: **12.03.1997**
(21) Numéro de dépôt: 94911223.9
(22) Date de dépôt: 25.03.1994
(51) Int. Cl.: B23K 11/06, F28F 3/12

(54) **PROCEDE D'ASSEMBLAGE DE BRIDES OU ANALOGUES DE RACCORDEMENT SUR UN FAISCEAU D'ECHANGEUR ET ECHANGEUR EN FAISANT APPLICATION**
VERFAHREN ZUM ZUSAMMENFÜGEN VON FLANSCHEN ODER ÄHNLICHEN VERBINDUNGSTEILEN BEI EINEM HEIZKÖRPERBÜNDEL
METHOD FOR MOUNTING FLANGES OR SIMILAR ATTACHMENT PARTS ON AN EXCHANGER PLATE AND EXCHANGER SO OBTAINED

(30) Priorité: 26.03.1993 FR 9303806
(43) Date de publication de la demande: 10.01.1996
(73) Titulaire: BARRIQUAND ECHANGEURS, F-42300 Roanne (FR)
(72) Inventeur: CRASSOUS, Nicolas, F-42300 Roanne (FR)
(74) Mandataire: Ropital-Bonvarlet, Claude
(86) Numéro de dépôt international: FR9400337
(87) Numéro de publication internationale: WO9422631

(56) Documents cités:
- DE-U- 1 653 900
- PATENT ABSTRACTS OF JAPAN vol. 007, no. 170 (E-189) 27 Juillet 1983 & JP,A,58 077 218 (TOKYO SHIBAURA DENKI KK) 10 Mai 1983
- PATENT ABSTRACTS OF JAPAN vol. 005, no. 187 (M-098) 26 Novembre 1981 & JP,A,56 105 874 (NIPPON STAINLESS STEEL CO LTD) 22 Aoüt 1981

## Description

### DOMAINE TECHNIQUE

La présente invention concerne le domaine des échangeurs de chaleur pour fluides divers et elle concerne, plus spécifiquement, le domaine technique des échangeurs dits à plaques.

### TECHNIQUE ANTERIEURE

Les échangeurs du type ci-dessus peuvent être considérés comme connus depuis un certain temps déjà. La technologie de fabrication des plaques peut être considérée comme bien maîtrisée maintenant, même si des perfectionnements peuvent toujours être apportés.

Par contre, des échangeurs de type ci-dessus connaissent parfois des désordres de structure dans la liaison entre les plaques et les brides ou analogues de raccordement, de tels désordres s'assimilant comme étant des fissures qui mettent en relation les deux circuits de circulation que, généralement, un échangeur délimite ou comporte.

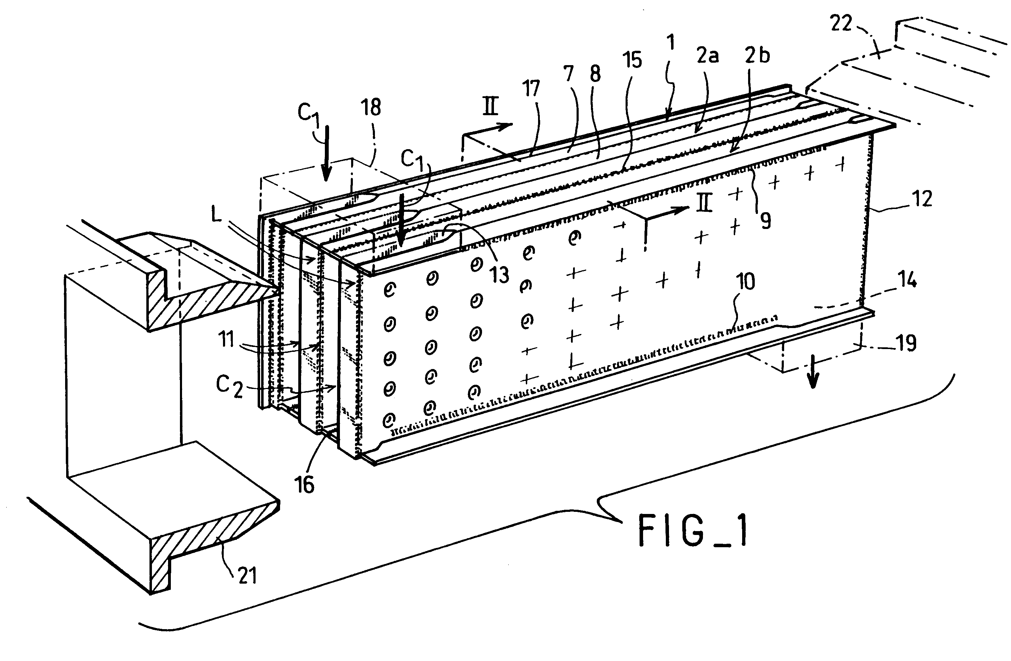

Pour mieux apprécier le problème que posent de tels échangeurs, il est fait référence aux **Fig. 1** à **3** qui illustrent un échangeur représentatif de l'art antérieur.

Un tel échangeur, du type à plaques, comprend un faisceau **1** qui est principalement constitué par une pluralité de chambres élémentaires **2a**,... **2n** qui sont toutes réalisées de façon identique.

Chaque chambre **2** est formée par deux plaques **3** et **4** en un matériau conducteur, embouties pour comporter des alvéoles **5** et **6** qui sont réparties régulièrement selon une implantation géométrique de tout type approprié pouvant être en alignement ou en quiconce indifféremment.

Les plaques **3** et **4** sont, également, embouties pour comporter le long de deux côtés parallèles dits longitudinaux des bords tombés **7** et **8** en opposition.

Une chambre **2** est constituée en mettant face à face deux plaques **3** et **4** qui sont réunies entre elles par soudure par points dans les fonds des alvéoles **5** et **6**, ainsi notamment que par des cordons de soudure **9** et **10** qui sont établis le long des côtés longitudinaux en retrait des bords tombés **7** et **8**.

Les plaques **3** et **4** sont, également, réunies le long des deux côtés opposés dits transversaux par un cordon de soudure **11** et **12** établi directement entre les rives des côtés ou encore par l'intermédiaire d'une bande de métal ou lanière **L** soudée.

Chaque paire de plaques constitue ainsi une chambre ou un premier circuit **C**_{**1**} dont le volume intérieur, délimité par l'opposition des alvéoles **5, 6**, communique avec l'extérieur par deux passages **13** et **14** qui s'ouvrent dans les bords tombés se faisant face **7** et **8** et qui résultent de conformations locales imposées aux plaques **3** et **4**, lors de leur phase d'emboutissage.

Un faisceau **1** est obtenu en juxtaposant une pluralité de chambres identiques **2** qui sont réunies entre elles par des cordons de soudure **15** et **16** établis le long des bords en opposition **7** et **8** se faisant de face.

De cette manière, deux chambres **2** consécutives délimitent entre elles un passage **C**_{**2**} constituant un deuxième circuit indépendant du premier et s'ouvrant au droit des côtés transversaux du faisceau **1**, ainsi constitué.

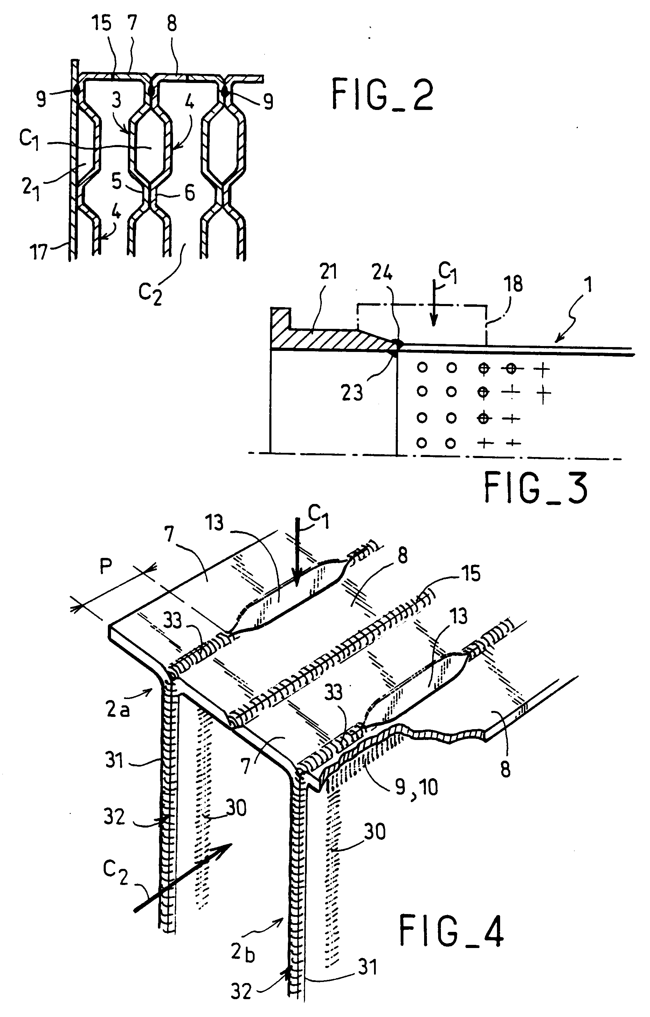

La **Fig. 2** fait apparaître qu'un faisceau **1** est constitué par un nombre donné de chambres **2** associées comme dit ci-dessus et complétées par l'adaptation de deux plaques extrêmes respectivement **4** et **3** liées par des cordons de soudure **15** et **16** et sur chacune desquelles est adaptée une plaque extrême latérale, plane et épaisse **17** rapportée par soudure et qui délimite, avec la plaque **4, 3** correspondante, une chambre d'extrémité **2**.

A partir du faisceau **1** décrit ci-dessus, l'échangeur est complété par l'adaptation, sur les bords tombés **7, 8** alignés des différentes chambres **2**, de deux tubulures **18** et **19** permettant de raccorder les différents circuits internes des chambres avec un réseau de fourniture d'un fluide d'échange de tout type approprié, chargé d'apporter ou de prélever des calories.

Le faisceau **1** est complété, également, comme cela ressort des **Fig. 1** et **3**, par l'adaptation, au droit des côtés transversaux, de deux brides ou; plus généralement, deux boîtes collectrices de raccordement **21** et **22** permettant de raccorder le second circuit interne constitué par la pluralité de passages **C**_{**2**} à un réseau de fourniture d'un fluide à contrôler thermiquement.

Selon la technique antérieure, de telles brides ou boîtes sont placées bout à bout avec les côtés transversaux de l'échangeur **1** et sont liées à ce dernier par deux cordons de soudure périphériques intérieur et extérieur **23** et **24**.

Comme cela est rendu apparent par la **Fig. 1**, chaque cordon de soudure, pour chaque boîte ou bride de raccordement, ne fait intervenir que des épaisseurs de matière relativement faible avec une double liaison au droit de chaque côté transversal pour chaque boîte et, plus spécialement, au niveau du cordon **11** et des angle des bords tombés en opposition **7** et **8** et des éventuelles lanières **L**.

Il s'avère qu'un tel mode de liaison est générateur, aux endroits ci-dessus, de fissures qui proviennent d'une fatigue mécanique générée par les variations de température, ainsi que par les vibrations fonctionnelles et les sollicitations de montage et de fixation.

### EXPOSE DE L'INVENTION

L'objet de l'invention vise à supprimer ce problème spécifique aux échangeurs du type à plaques en proposant un nouveau procédé et une nouvelle structure d'un tel échangeur, faisant intervenir des moyens de liaison entre faisceau et boîtes ou brides de raccordement, de conception nouvelle favorisant une meilleure étanchéité entre les deux circuits du faisceau, ainsi qu'une liaison mécanique particulièrement résistante entre le faisceau et les brides ou boîtes.

Pour atteindre les objectifs ci-dessus, le procédé d'assemblage de brides ou analogues de raccordement sur un faisceau d'un échangeur de chaleur, du type à plaques, est caractérisé en ce qu'il consiste à :
- souder entre elles, pour chaque chambre, les parties des deux plaques correspondant aux côtés transversaux,
- emboîter sur chaque extrémité une frette ou ceinture,
- lier par soudure périphérique interne et externe chaque ceinture ou frette emboîtée sur chaque extrémité transversale,
- utiliser la frette ou la ceinture en tant que bride ou analogue de raccordement.

L'invention a pour objet, également, à titre de produit industriel nouveau un échangeur de chaleur du type à plaques, caractérisé en ce que :
- les brides ou analogues de raccordement sont adaptées sur les extrémités du faisceau par des frettes ou ceintures emboîtées et soudées sur lesdites extrémités par deux cordons périphériques interne et externe.

Diverses autres caractéristiques ressortent de la description faite ci-dessous en référence aux dessins annexés qui montrent, à titre d'exemples, des formes de réalisation et de mise en oeuvre de l'objet de l'invention.

### BREVE DESCRIPTION DES DESSINS

La **Fig. 1** est une perspective, en partie arrachée, illustrant un échangeur de chaleur du type à plaques conforme à l'art antérieur.

La **Fig. 2** est une coupe transversale partielle prise sensiblement selon le plan II-II de la **Fig. 1**.

La **Fig. 3** est une coupe-élévation montrant, à échelle différente, une caractéristique constructive d'un échangeur selon l'art antérieur.

La **Fig. 4** est une perspective, en partie arrachée, montrant, à plus grande échelle, les moyens selon l'invention.

La **Fig. 5** est une perspective partielle, en partie arrachée, montrant sous un autre angle l'objet de l'invention.

La **Fig. 6** est une coupe-élévation partielle mettant en évidence une des caractéristiques du procédé selon l'invention et de l'aspect structurel de l'échangeur ainsi obtenu.

Les **Fig. 7** et **8** sont deux perspectives partielles, en partie arrachée, montrant deux variantes d'application du procédé selon l'invention.

### MEILLEURE MANIERE DE REALISER L'INVENTION

Selon les **Fig. 4**, **5** et **6**, qui se rapportent à l'objet de l'invention, le procédé mis en oeuvre consiste à réaliser, comme dit en référence de l'art antérieur, un faisceau **1** à partir de chambres **2** qui sont chacune constituées par deux plaques **3** et **4** conformées comme dit précédemment. Ainsi, les mêmes références désignent les mêmes éléments, parties ou organes constitutifs communs à l'art antérieur et à l'invention.

La **Fig. 4** montre une perspective partielle d'un faisceau d'échangeur pour lequel deux chambres **2a** et **2b** seulement sont représentées. Il doit, bien entendu, être retenu que le faisceau **1** pourrait être constitué par un nombre tout à fait indifférent de chambres **2** qui sont associées entre elles par la liaison des bords adjacents **7** et **8** au moyen des cordons de soudure **15** et **16** établis tout le long des côtés longitudinaux.

Selon l'invention, toutefois, il est prévu de réaliser chaque chambre **2**, **2**_{**1**} en faisant intervenir une soudure transversale **30** qui est établie pour chaque côté transversal, en retrait des parties ou rives **31** des deux plaques **3** et **4** ou **4** et **17**. La soudure transversale **30** est établie sur toute la longueur ou la hauteur ou la largeur, c'est-à-dire la mesure séparant les côtés longitudinaux pris en eux-mêmes, considérés par les bords tombés **7, 8** ou encore par les soudures **9** et **10** qui unissent les plaques **3** et **4** ou **4** et **17** le long desdits côtés longitudinaux.

La mesure de retrait de la soudure **30** par rapport aux parties ou rives **31** est au moins égale à la largeur de cette soudure, mais préférentiellement peut être aussi plus importante. L'essentiel est d'exécuter une telle soudure **30**, de manière qu'une liaison intime soit établie périphériquement avec raccordement par rapport aux soudures **9** et **10**. De préférence, la soudure **30** est établie à la molette, bien qu'il puisse être considéré que d'autres moyens adaptés peuvent être aussi mis en oeuvre.

Selon une autre phase du procédé de constitution de chaque chambre **2**, il est avantageusement prévu aussi, de façon supplémentaire, de réunir les plaques **3** et **4** et **4** et **17** au droit des côtés transversaux au moyen d'un cordon de soudure **32** qui unit les rives **31** des deux plaques. Le cordon de soudure **32** est établi de façon conventionnelle et vient doubler la soudure **30** pour établir une étanchéité certaine et une séparation physique réelle entre le premier circuit interne **C**_{**1**} de la chambre **2** et les passages adjacents **C**_{**2**} ménagés par l'association de deux chambres, telles **2a** et **2b**.

Selon une autre disposition de l'invention, le cordon **32** est, de préférence, établi aussi pour former ou se raccorder à un cordon de rechargement **33** qui est exécuté entre le bord transversal des rives **31**, au droit des bords tombés **7** et **8**, et le long de ces bords jusqu'aux ouvertures **13** destinées à être placées en relation mutuelle pour celles d'un même côté avec la tubulure **18** ou **19** correspondante.

Le cordon de rechargement **33** est ainsi établi sur une plage **P** qui est comprise entre le côté transversal du faisceau ainsi constitué et l'amorce des ouvertures **13**.

Selon une autre phase de réalisation du procédé, il peut être prévu de faire intervenir une phase de dressage ou de rectification de la plage **P**, de manière à égaliser les cordons de rechargement **33** pour disposer d'un état de surface présentant une planéité convenable, sinon rectifiée, sur chaque côté longitudinal du faisceau.

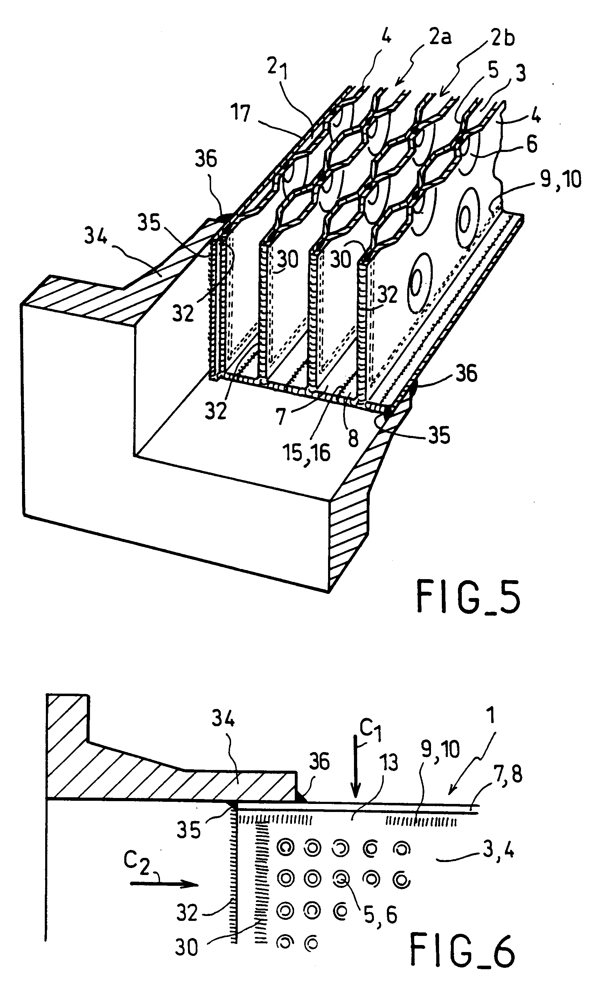

Selon une autre disposition de l'invention, le faisceau **1** est ensuite constitué en adaptant sur chaque extrémité transversale une frette ou une ceinture **34** qui et emboîtée pour être adaptée sur ladite partie terminale, de manière à entourer totalement cette dernière, comme cela apparaît à la **Fig. 5**. La ceinture ou frette **34** est ensuite liée à la partie terminale correspondante du faisceau **1** par deux cordons de soudure **35** et **36** établis périphériquement de façon interne et externe respectivement, comme cela apparaît aux **Fig. 5** et **6**.

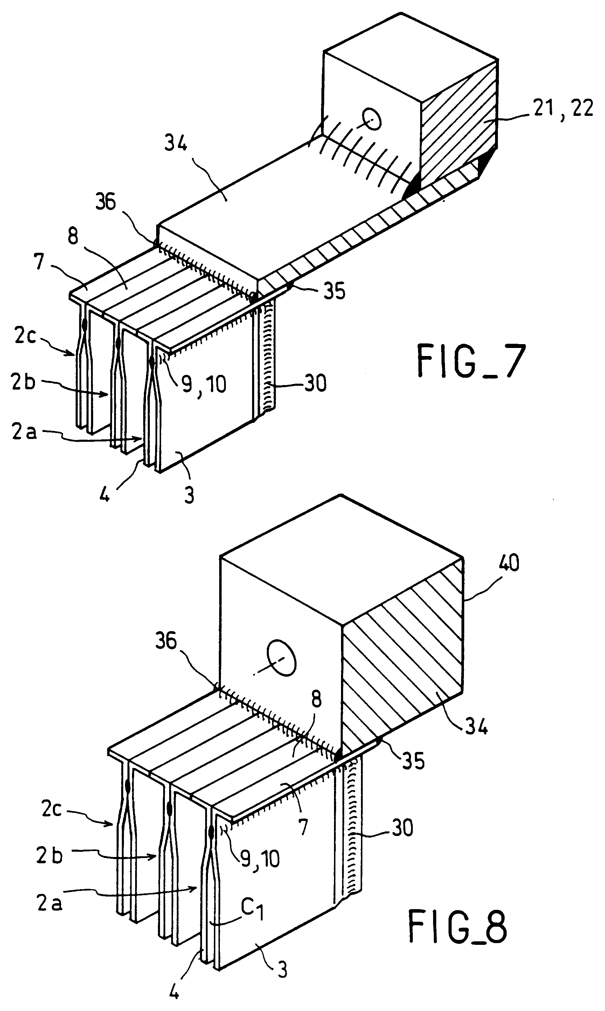

La **Fig. 7** montre que la frette ou ceinture **34** peut être constitutive d'une boîte de raccordement collectrice **21** ou **22** ou d'une bride **40** d'adaptation par tous moyens appropriés d'une boîte ou analogue, tel que cela est illustré par la **Fig. 8**. Dans le deux cas, le procédé et l'assemblage sont conduits comme dit précédemment de façon à procurer les avantages qui suivent.

Tout d'abord, étant donné que la ceinture ou frette **34** est emboîtée extérieurement à l'extrémité ou à la partie terminale transversale du faisceau **1**, il est possible de lui conférer une épaisseur de matière notablement plus importante que celle selon la méthode traditionnelle. Il en résulte une liaison mécanique plus résistante entre la bride ou analogue et le faisceau, ainsi qu'une déformation plus faible, voire sensiblement inexistante, lors de l'établissement des cordons de soudure **35** et **36**.

Ensuite, le cordon de soudure **35** est destiné à établir une liaison périphérique mais n'a pas pour vocation, comme dans l'art antérieur, à assurer supplémentairement l'étanchéité entre les deux circuits internes constitutifs du faisceau. En effet, l'étanchéité, entre le circuit interne **C**_{**1**} de chaque chambre **2** et les passages **C**_{**2**} ménagés par deux chambres adjacentes, est assurée de façon efficace par la ligne **30** et le cordon **32** pour chaque chambre, ainsi que par le suivi établi entre chaque cordon **32** et le cordon de rechargement **33**. De cette manière, le cordon périphérique interne **35** peut être exécuté uniquement dans le but de joindre les bords **7** et **8** établis dans un même plan pour chaque côté longitudinal, ainsi que les plaques latérales **17**.

Par ailleurs, la liaison de chaque frette ou ceinture **34**, par l'intermédiaire de deux cordons **35** et **36,** permet l'établissement d'une liaison mécanique robuste qui se trouve établie également par la présence de la plage **P** qui permet de faire intervenir des emboîtements disposant d'un jeu de tolérance acceptable avec les conditions de fabrication, mais qui sont, dans tous les cas, avantageuses pour conduire à un emboîtement à même de procurer une résistance mécanique améliorée.

Un autre avantage de la technique selon l'invention réside dans la possibilité de faire intervenir des brides ou analogues de raccordement de forte épaisseur et massives qui ne subissent que peu, voire pas, de déformation lors de l'exécution des cordons **35** et **36**.

Il peut ainsi être prévu d'exécuter des brides ou des boîtes avec établissement préalable des plans d'appui rectifiés sans qu'une opération de reprise ne soit ensuite envisagée après la liaison par soudure avec le faisceau.

### POSSIBILITE D'APPLICATION INDUSTRIELLE

Il est ainsi possible d'envisager d'implanter, dans un atelier ou une usine, deux lignes de fabrication dont l'une est réservée à l'usinage des brides ou analogues de raccordement parallèlement à la fabrication des faisceaux sur ou le long de la seconde ligne, après quoi l'opération d'assemblage peut être exécutée sans donner lieu à reprise importante.

## Revendications

1. Procédé d'assemblage de brides ou analogues de raccordement sur un faisceau d'un échangeur de chaleur, du type constitué par une pluralité de chambres individuelles, chacune formée par deux plaques conductrices bordées sur leurs côtés dits longitudinaux par des bords tombés en opposition et soudées entre elles pour délimiter un circuit interne s'ouvrant sur lesdits côtés longitudinaux, par deux ouvertures latérales débouchant dans deux tubulures de raccordement à une source de fourniture d'un fluide échangeur, lesdites chambres étant disposées côte à côte en étant réunies par soudure des bords tombés se faisant face pour délimiter entre elles, à chaque fois, un passage délimitant un second circuit interne indépendant du premier, s'ouvrant au droit des côtés dits transversaux et débouchant dans deux brides ou analogues rapportées en bout du faisceau pour le raccordement avec un réseau de circulation d'un fluide à refroidir ou à chauffer,
caractérisé en ce qu'il consiste à :
- souder entre elles, pour chaque chambre, les parties des deux plaques correspondant aux côtés transversaux,
- emboîter sur chaque extrémité une frette ou ceinture,
- lier par soudure périphérique interne et externe chaque ceinture ou frette emboîtée sur chaque extrémité transversale,
- utiliser la frette ou la ceinture en tant que bride ou analogue de raccordement.

2. Procédé selon la revendication 1, caractérisé en ce que l'on soude les parties transversales des extrémités de chaque paire de plaques formant une chambre, en exécutant une soudure à la molette située parallèlement aux parties transversales et en retrait de ces dernières et sur toute l'étendue comprise entre les bords tombés.

3. Procédé selon la revendication 2, caractérisé en ce que l'on soude les parties transversales des extrémités de chaque paire de plaques formant une chambre en exécutant en plus une liaison directe des parties transversales par un cordon de soudure.

4. Procédé selon la revendication 3, caractérisé en ce que l'on exécute le cordon de soudure de liaison directe des parties transversales, de manière à le raccorder à des cordons de rechargement exécutés pour lier les côtés longitudinaux des plaques à partir des extrémités transversales et sur une plage correspondant à l'emboîtement des frettes ou ceintures.

5. Procédé selon l'une des revendications 1 à 4, caractérisé en ce qu'on dresse les extrémités transversales du faisceau emboîtées par les brides ou analogues.

6. Echangeur de chaleur, du type comprenant un faisceau (**1**) constitué par une pluralité de chambres (**2**) formées chacune par deux plaques conductrices (**3, 4** ou **17**), bordées sur leurs côtés longitudinaux par des bords tombés en opposition (**7, 8**) et soudées entre elles pour délimiter un circuit interne (**C**_{**1**}) s'ouvrant sur lesdits côtés longitudinaux par des ouvertures (**13**) débouchant dans deux tubulures (**18, 19**), lesdites chambres étant disposées côte à côte en étant réunies par leurs bords tombés se faisant face pour délimiter un passage (**C**_{**2**}) constituant un second circuit interne indépendant du premier et s'ouvrant au droit des extrémités transversales du faisceau, lesquelles sont équipées de deux brides ou analogues de raccordement (**21, 22**),
caractérisé en ce que :
- les brides ou analogues de raccordement sont adaptées sur les extrémités du faisceau par des frettes ou ceintures (**34**) emboîtées et soudées sur lesdites extrémités par deux cordons périphériques interne (**35**) et externe (**36**).

7. Echangeur selon la revendication 6, caractérisé en ce que les frettes ou ceintures (**34**) sont partie intégrante des brides ou analogues.

8. Echangeur selon la revendication 6 ou 7, caractérisé en ce que les frettes ou ceintures (**34**) sont emboîtées sur les extrémités transversales du faisceau (**1**), lesquelles présentent à cette fin chacune une plage dressée (**P**).

9. Echangeur selon la revendication 6, caractérisé en ce que les plaques (**3, 4, 17**) sont réunies entre elles au droit de leurs côtés transversaux par une soudure (**30**) établie en retrait des rives ou parties transversales (**31**) desdits côtés et sur toute la longueur séparant les côtés longitudinaux des plaques.

10. Echangeur selon la revendication 9, caractérisé en ce que les plaques sont réunies entre elles aussi au droit de chaque côté transversal par un cordon de soudure (**32**) établi le long des rives.

11. Echangeur selon la revendication 10, caractérisé en ce que le cordon de soudure (**32**) établi le long des rives se raccorde à des cordons de rechargement (**33**) exécutés le long des côtés longitudinaux et sur la plage (**P**) correspondant à l'emboîtement des frettes ou ceintures.

## Claims

1. The method of assembling coupling members to a heat exchanger bundle of the type made up of a plurality of individual chambers, each formed by two conductive plates bonded along their "longitudinal" sides via oppositely-directed flanges, and welded together in pairs to define an internal circuit that opens out at said longitudinal sides via two lateral openings opening out into two respective tubes for coupling them to a supply of a heat exchange fluid, said chambers being disposed side by side and being united by welding the facing flanges together, thereby defining respective passages between adjacent chambers that define a second circuit independent of the first and opening out at "transverse" sides into two coupling members disposed in end-to-end correspondence with the bundle for connection to a network for circulating a fluid that is to be cooled or heated;
the method being characterized in that it consists in:
• for each chamber, welding together the portions of the two plates that correspond to the transverse sides;
• engaging a hoop or belt on each end;
• bonding each hoop or belt that is engaged on each transverse end by means of internal and external peripheral welding; and
• using the hoop or belt as a coupling member.

2. A method according to claim 1, characterized in that the transverse portions of the ends of each pair of chamber-forming plates are welded together by executing a seam weld parallel to the transverse portions and set back therefrom, and over the entire extent between the flanges.

3. A method according to claim 2, characterized in that the transverse portions at the ends of each chamber-forming pair of plates are welded together by also executing a direct bond between the transverse portions by means of a weld fillet.

4. A method according to claim 3, characterized in that the weld fillet directly bonding together the transverse portions is executed in such a manner as to connect with filler welds executed to bond together the longitudinal sides of the plates, and running from the transverse ends thereof over a range corresponding to the extent of the overlapping engagement of the hoops or belts.

5. A method according to any one of claims 1 to 4, characterized in that the transverse ends of the bundle engaged by the flanges are trued.

6. A heat exchanger of the type comprising a bundle (1) made up of a plurality of chambers (2), each formed by two conductive plates (3, 4, or 17) bordered along their longitudinal sides by flanges (7, 8) and welded together to define an internal circuit (C₁) opening out to said longitudinal sides via openings (13) that open out into two tubes (18, 19), said chambers being disposed side by side and being united via their facing flanges to define a passage (C₂) constituting a second internal circuit, independent of the first and opening out at the transverse ends of the bundle, which ends are fitted with two coupling members (21, 22),
characterized in that:
• the coupling members are fitted to the ends of the bundle by hoops or belts (34) engaged on and welded to said ends via two peripheral welds, one internal (35) and the other external (36).

7. A heat exchanger according to claim 6, characterized in that the hoops or belts (34) constitute integral portions of the coupling members.

8. A heat exchanger according to claim 6 or 7, characterized in that the hoops or belts (34) are engaged on the transverse ends of the bundle (1), each of which ends is provided for this purpose with a respective trued range (P).

9. A heat exchanger according to claim 6, characterized in that the plates (3, 4, 17) are united with one another at their transverse sides by welds (30) established so as to be set back from the transverse portions or edges (31) of said sides, and extending over the entire length between the longitudinal sides of the plates.

10. A heat exchanger according to claim 9, characterized in that the plates are also united to one another at each transverse side by means of a respective weld fillet (32) established along the edges.

11. A heat exchanger according to claim 10, characterized in that each weld fillet (32) established along an edge connects with filler welds (33) performed along the longitudinal sides and over the range (P) corresponding to engagement with the hoops or belts.

## Patentansprüche

1. Verfahren zum Zusammenbau von Verbindungsflanschen oder entsprechenden Verbindungsteilen bei einem Bündel eines Wärmeaustauschers, der der Art nach von einer Anzahl von einzelnen Kammern gebildet ist, von denen jede durch zwei leitende Platten gebildet ist, die an ihren Längsseiten genannten Seiten von Rändern eingefaßt sind, die entgegengesetzt umgeschlagen und miteinander verschweißt sind, um einen inneren Umlauf zu umgrenzen, der auf den genannten Längsseiten durch zwei seitliche Öffnungen offen ist, die in zwei Rohrleitungen zum Anschluß an eine Quelle zur Versorgung mit einem Austauschströmungsmittel einmünden, wobei die genannten Kammern, die nebeneinanderliegend angeordnet und durch die Verschweißung der umgeschlagenen Ränder vereint sind, einander zugewandt sind, um zwischeneinander jeweils einen Kanal abzugrenzen, der einen zweiten, inneren Umlauf umgrenzt, der längs der Seiten, die Querseiten genannt sind, offen ist und in zwei Flansche oder dergleichen einmündet, die am Ende des Bündels angesetzt sind, für den Anschluß an ein Umlaufnetz für ein zu kühlendes oder zu erwärmendes Strömungsmittel,
dadurch gekennzeichnet, daß es darin besteht, daß man
- für jede Kammer die Abschnitte der beiden Platten, die den Querseiten entsprechen, zusammenschweißt,
- auf jedem Ende ein Band oder einen Gurt ansetzt,
- durch eine innere und äußere Umfangsschweißung jedes angesetzte Band oder jeden angesetzten Gurt auf jedem querverlaufenden Ende befestigt, und
- das Band oder den Gurt als Verbindungsflansch oder Verbindungsteil benutzt.

2. Verfahren nach Anspruch 1, dadurch gekennzeichnet, daß man die querverleufenden Abschnitte der Enden eines jeden Paares von Platten, die eine Kammer bilden, verschweißt, indem man eine Rollennahtschweißung vornimmt, die parallel zu den querverlaufenden Abschnitten angeordnet ist und gegenüber diesen zurückgesetzt ist, sowie über die gesamte Erstreckung, die zwischen zwei umgeschlagenen Rändern vorliegt.

3. Verfahren nach Anspruch 2, dadurch gekennzeichnet, daß man die querverlaufenden Abschnitte der Enden eines jeden Paares von Platten, die eine Kammer bilden, verschweißt, indem man außerdem eine unmittelbare Verbindung der querverlaufenden Abschnitte durch eine Schweißnaht herstellt.

4. Verfahren nach Anspruch 3, dadurch gekennzeichnet, daß man die Schweißnaht für die unmittelbare Verbindung der querverlaufenden Abschnitte derart durchführt, daß man sie mit Auftragsschweißnähten verbindet, die hergestellt wurden, um die Längsseiten der Platten, ausgehend von den querverlaufenden Enden, zu verbinden, sowie über einen Bereich hinweg, der dem Ansatz der Bänder oder Gurte entspricht.

5. Verfahren nach einem der Ansprüche 1 bis 4, dadurch gekennzeichnet, daß man die querverlaufenden Enden des Bündels zurichtet, an die die Flansche oder dergleichen angesetzt werden.

6. Wärmeaustauscher, der der Art nach ein Bündel (1) aufweist, das von einer Anzahl von Kammern (2) gebildet ist, die jeweils durch zwei leitende Platten (3, 4 oder 17) gebildet sind, die an ihren Lägnsseiten durch entgegengesetzt umgeschlagene Ränder (7, 8) eingefaßt sind und miteinander verschweißt sind, um einen inneren Umlauf (C₁) zu umgrenzen, der auf den genannten Längsseiten durch Öffungen (13) offen ist, die in zwei Rohrleitungen (18, 19) einmünden, wobei die genannten Kammern nebeneinanderliegend angeordnet sind und durch ihre umgeschlagenen Ränder vereint sind, die einander zugewandt sind, um einen Kanal (C₂) zu umgrenzen, der einen zweiten, inneren Umlauf bildet, der unabhängig ist vom ersten und längs der querverlaufenden Enden des Bündels offen ist, welche mit zwei Verbindungsflanschen oder entsprechenden Verbindungsteilen (21, 22) versehen sind, dadurch gekennzeichnet, daß
- die Verbindungsflansche oder entsprechenden Verbindungsteile auf den Enden des Bündels durch Bänder oder Gurte (34) angefügt sind, die auf den genannten Enden angesetzt und durch zwei Umfangsnahten, nämlich eine innere (35) und eine äußere (36), festgeschweißt sind.

7. Austauscher nach Anspruch 6, dadurch gekennzeichnet, daß die Bänder oder Gurte (34) ein integraler Teil der Flansche oder dergleichen sind.

8. Austauscher nach Anspruch 6 oder 7, dadurch gekennzeichnet, daß die Bänder oder Gurte (34) auf den querverlaufenden Enden des Bündels (1) angesetzt sind, welche zu diesem Zweck jeweils einen zugerichteten Bereich (P) darbieten.

9. Austauscher nach Anspruch 6, dadurch gekennzeichnet, daß die Platten (3, 4, 17) miteinander längs ihrer Querseiten durch eine Schweißung (30) vereint sind, die gegenüber den Seitenstreifen oder querverlaufenden Abschnitten (31) der genannten Seiten versetzt hergestellt sind, sowie über die gesamte Länge, die die Längsseiten der Platten trennt.

10. Austauscher nach Anspruch 9, dadurch gekennzeichnet, daß die Platten untereinander auch längs jeder Querseite durch eine Schweißnaht (32) vereint sind, die längs der Seitenstreifen hergestellt ist.

11. Austauscher nach Anspruch 10, dadurch gekennzeichnet, daß die Schweißnaht (32), die längs der Seitenstreifen hergestellt ist, an Auftragsschweißnähte (33) anschließt, die längs der Längsseiten und über dem Bereich (P) ausgeführt sind, der dem Ansatz der Bänder oder Gurte entspricht.
